**Europäisches Patentamt**

**European Patent Office**

**Office européen des brevets**

(19)

(11) Veröffentlichungsnummer : **0 337 061 B1**

(12)

# EUROPÄISCHE PATENTSCHRIFT

(45) Veröffentlichungstag der Patentschrift :
**15.07.92 Patentblatt 92/29**

(51) Int. Cl.$^5$ : **B01D 46/02**

(21) Anmeldenummer : **89101760.0**

(22) Anmeldetag : **02.02.89**

(54) **Haltevorrichtung für Filterschläuche.**

(30) Priorität : **09.04.88 DE 3811929**

(43) Veröffentlichungstag der Anmeldung :
**18.10.89 Patentblatt 89/42**

(45) Bekanntmachung des Hinweises auf die
Patenterteilung :
**15.07.92 Patentblatt 92/29**

(84) Benannte Vertragsstaaten :
**AT BE ES FR IT NL SE**

(56) Entgegenhaltungen :
**DE-A- 1 507 883**
**DE-A- 2 705 352**
**DE-A- 3 527 768**
**DE-U- 6 609 632**
**US-A- 3 186 147**
**US-A- 4 364 758**

(73) Patentinhaber : **WALTHER & CIE.**
**AKTIENGESELLSCHAFT**
**Waltherstrasse 51**
**W-5000 Köln 80 (Dellbrück) (DE)**

(72) Erfinder : **Frank, Werner, Dipl.-Ing.**
**Goldbornstrasse 92**
**W-5060 Bergisch-Gladbach 2 (DE)**

## Beschreibung

Die Erfindung betrifft Staubgasfilter mit einem Filtergehäuse, das durch einen Schlauchboden in einen Staubluft- und einen Reinluftraum unterteilt ist, wobei die Filterschläuche mit ihrem oberen offenen Ende an dem Schlauchboden befestigt sind und mit ihrem geschlossenen, unteren Ende mittels einer neuartigen Haltevorrichtung am Filtergehäuse arretiert sind.

Mit derartigen Haltevorrichtungen werden die nach unten hängenden Filterschläuche im unteren Bereich fixiert, damit sich die Filterschläuche dort nicht aneinanderlegen und somit den Abscheidegrad des Filters verschlechtern.

Die DE-OS 27 05 352 beschreibt eine Haltevorrichtung für das untere, geschlossene Ende von Filterschläuchen in Staubgasfiltern, wobei das untere Ende mit einer Klemmvorrichtung versehen ist, die sich an einem aus rechtwinklig mit Abstand angeordneten, hochstehenden Blechen bestehenden, und somit begrenzende Felder bildenden Kreuzrost abstützt.

Der Erfindung liegt die Aufgabe zugrunde, eine Haltevorrichtung für Filterschläuche in Staubgasfiltern zu schaffen, mittels der die Filterschläuche sich in axialer Richtung frei bewegen können und in radialer Richtung nahezu fest fixiert sind.

Diese Aufgabe wird dadurch gelöst, daß das untere Ende des Filterschlauches mittels eines einen geschlossenen Boden mit Kragen und darin eingelassener Sicke aufweisenden Stutzen verschlossen ist, daß eine aus zwei oder mehreren u-förmigen Bügeln gebildete Klemmvorrichtung vorgesehen ist, wobei die freien Enden der Bügelstege der Bügel mit einem Befestigungsring verbunden sind, daß der Befestigungsring in die Sicke des Stutzens eingelassen und die Klemmvorrichtung mit den Bügeln in das Feld des Kreuzrostes eingeschoben ist, dessen Bleche eine Höhe (H) aufweisen, die zum Abstand (B) der Bleche ein Verhältnis von B : H = 1 : 0,5 bis 1 : 5, vorzugsweise 1 : 1,5 aufweisen.

Mit dieser Anordnung reicht das Schlauchende mt dem Stutzen und der Klemmvorrichtung frei I in den Kreuzrost ein und kann sich somit in axialer Richtung frei bewegen. Schädliche Spannungen in den Fitlerschläuchen werden vermieden. Die Bügel der Klemmvorrichtung liegen an den Innenseiten der Bleche des Kreuzrostes an.

Die hochstehenden Bleche des Kreuzrostes geben einerseits eine ausreichende Fixierung in radialer Richtung, lassen aber andererseits in axialer Richtung eine gewisse Bewegungsfreiheit, ohne die Fixierung zu beeinträchtigen. Dabei weisen die Bleche eine derartige Höhe auf, daß sie neben der zentrierenden Wirkung eine Gleichrichtung der Rohgasströme bewirken und damit den Verschleiß der unteren Schlauchenden vermindern.

Der untere Filterschlauchstutzen kann einen geschlossenen Boden mit Kragen aufweisen, in den eine Sicke eingelassen ist, in die ein oberer Befestigungsring der Klemmvorrichtung eingelassen ist. Dabei kann die Klemmvorrichtung zwei oder mehrere U-förmige Bügel aufweisen, wobei die freien Enden der Bügelstege mit dem Befestigungsring verbunden sind und der Verbindungssteg der Bügel eine nach innen oder außen gerichtete Wölbung aufweist.

Eine vorteilhafte Ausgestaltung des Kreuzrostes ist darin zu sehen, daß die Bleche des Kreuzrostes versetzt angeordnete Schlitze aufweisen, mit denen sie rostbildend ineinandergesteckt sind. Damit ist eine einfache Steckverbindung geschaffen, die sich jederzeit einfach ein- und ausbauen läßt. Auch kann der Kreuzrost aus Profilblechen gebildet sein, die untereinander verbunden sind.

Sind an der Innenseite des Filtergehäuses Stützkonsolen vorgesehen, so kann der gesamte Kreuzrost ohne feste Verbindungen lose im Filtergehäuse eingelegt werden.

Mittels der Klemmvorrichtung lassen sich die unteren geschlossenen Enden der Filterschläuche in einfachster Weise in die Felder des Kreuzrostes von oben einschieben und nach oben wieder ausbauen. Die Bügel der Klemmvorrichtungen sind so elastisch, daß sie sich axial verschieben lassen, ohne größeren Verschleiß an den Innenseiten der Bleche des Kreuzrostes zu verursachen, geben aber gleichzeitig eine ausreichende Fixierung in radialer Richtung. Die Klemmvorrichtung mit den drahtförmigen Bügeln bieten dem Staub nahezu keine Auflageflächen zur Ablagerung.

Ein Ausführungsbeispiel der Erfindung ist in der Zeichnung dargestellt und wird nachfolgend näher beschrieben. Es zeigt:

Fig. 1 einen Schnitt durch den unteren Teil eines Filterschlauches,
Fig. 2 einen Schnitt gemäß Linie A-B in Fig. 1,

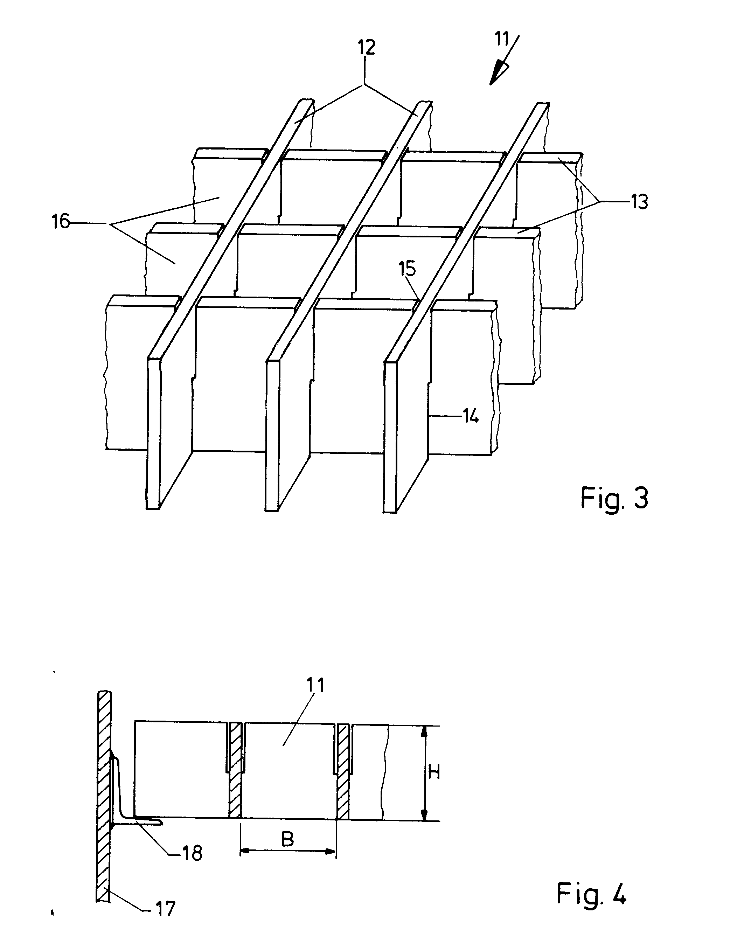

Fig. 3 eine räumliche Darstellung des Kreuzrostes,
Fig. 4 die Auflagerung des Kreuzrostes,
Fig. 5 bis 7 Ausgestaltungen des Kreuzrostes.

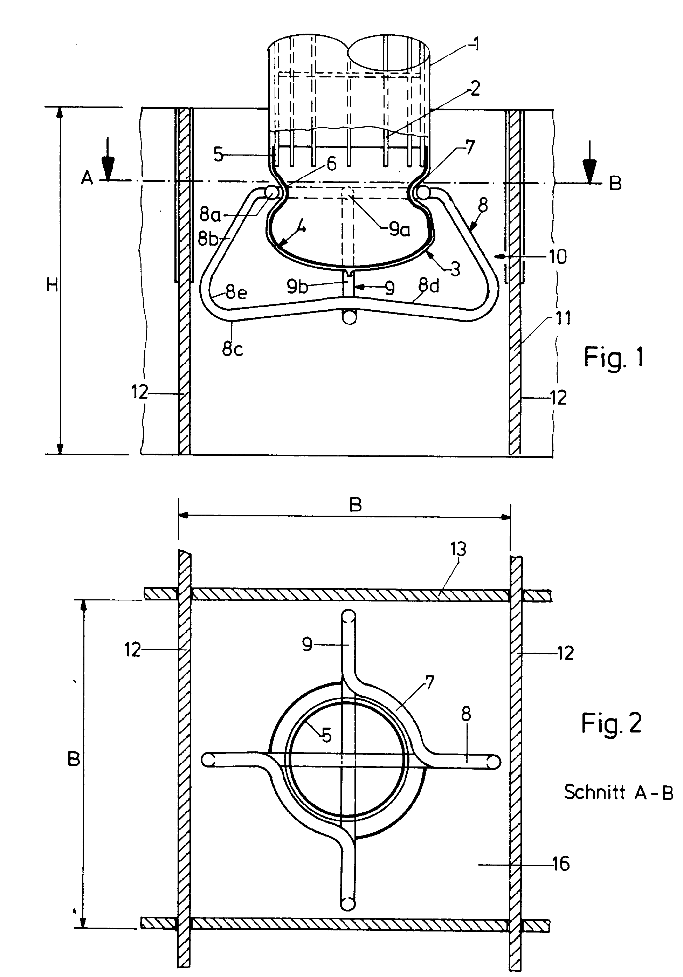

Das Filtergehäuse mit dem oberen Schlauchboden ist nicht dargestellt. Fig. 1 zeigt lediglich ein unteres Ende eines Filterschlauches 1, mit angedeutetem inneren Stützgewebe 2. Das untere Ende des Filterschlauches 1 ist mit einem Stutzen 3 verschlossen, der einen geschlossenen Boden 4 mit einem Kragen 5 aufweist.

Das untere geschlossene Ende des Filterschlauches 1 ist über den Stutzen 3 gestülpt und dort befestigt. Der Kragen 5 ist mit einer rundumlaufenden Sicke 6 versehen. In diese Sicke 6 ist ein geschlossener Ring 7 eingedrückt. An der Außenseite des Ringes 7 sind zwei oder mehrere U-förmige Bügel 8 und 9 mit ihren freien Enden 8a und 9a befestigt. Die Bügel bestehen aus sich nach unten konisch erweiternden Bügelstegen 8b,9b, die mittels eines Verbindungssteges 8c miteinander verbunden sind. Im Ausführungsbeispiel sind die Verbindungsstege mit einer nach innen gerichteten Wölbung versehen, die in Fig. 1 mit 8d bezeichnet sind. Die nicht näher bezeichnete Wölbung des Bügels 9 ist so ausgestaltet, daß sie den Bügel 8 von unten umgreift. Die Wölbung 8d in Verbindung mit dem Radius 8e verleiht dem Bügel eine gewisse Elastizität, so daß er von oben in das Feld 16 eines Kreuzrostes 11 eingeschoben und dort fixiert werden kann. Der Kreuzrost 11 besteht aus Blechen 12 und 13, die mit versetzt angeordneten Schlitzen 14 und 15 versehen sind. Mittels dieser Schlitze lassen sich die Bleche zu einem Rost ineinanderstecken. Eine Schweißverbindung oder dgl. ist dann nicht mehr erforderlich.

Wie Fig. 4 schematisch andeutet, kann das Filtergehäuse 17 an der Innenseite mit einer winkelförmigen Konsole 18 versehen werden, auf die der Kreuzrost 11 lose aufgelegt werden kann.

Im Ausführungsbeispiel besteht die Klemmvorrichtung 10 aus zwei Bügel 8 und 9. Es ist ohne weiteres denkbar, einen dritten oder vierten Bügel vorzusehen und damit eine diagonale Zentrierung vorzunehmen.

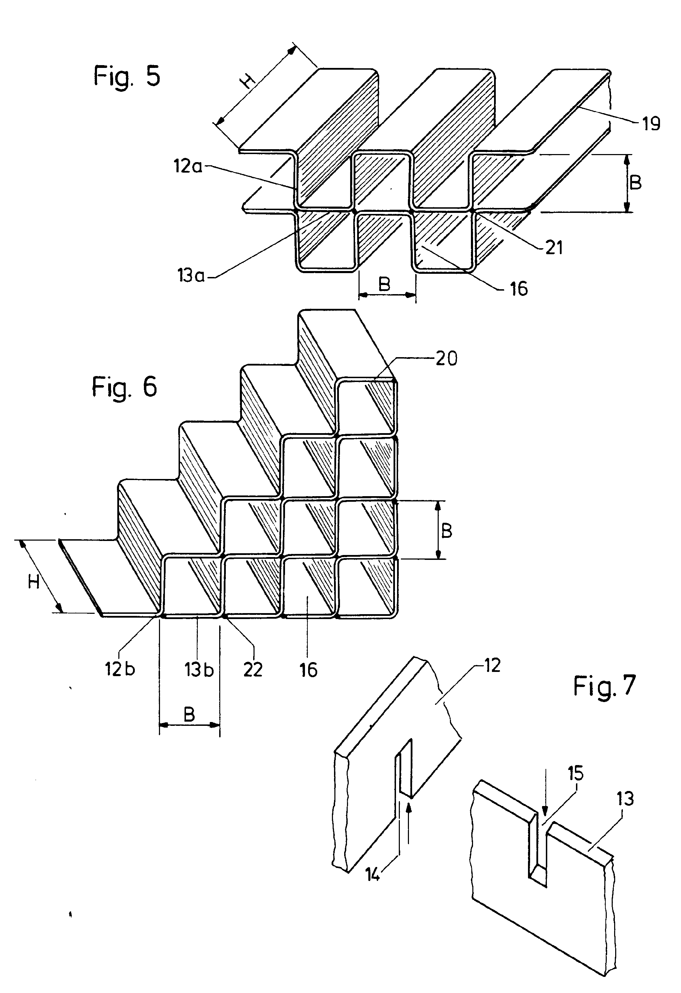

Wie die Fig. 5 und 6 zeigen, kann der Kreuzrost 11 aus Mäanderblechen 19 oder Treppenblechen 20 gebildet sein, die an den Verbindungsecken 21,22 untereinander verbunden sind, z.B. durch eine Schweiße.

## Patentansprüche

1. Staubgasfilter mit nach unten hängenden Filterschläuchen, wobei das untere, geschlossene Ende der Filterschläuche mit einer Klemmvorrichtung (10) versehen ist, die sich an einem aus rechtwinklig mit Abstand angeordneten, hochstehenden Blechen bestehenden, und somit begrenzende Felder bildenden Kreuzrost abstützt, dadurch gekennzeichnet, daß das untere Ende des Filterschlauches (1) mittels eines einen geschlossenen Boden (4) mit Kragen (5) und darin eingelassener Sicke (6) aufweisenden Stutzen (3) verschlossen ist, daß eine aus zwei oder mehreren u-förmigen Bügeln (8, 9) gebildete Klemmvorrichtung (10) vorgesehen ist, wobei die freien Enden (8a, 9a) der Bügelstege (8b, 9b) der Bügel (8, 9) mit einem Befestigungsring (7) verbunden sind, daß der Befestigungsring (7) in die Sicke (6) des Stutzens (3) eingelassen und die Klemmvorrichtung (10) mit den Bügeln (8, 9) in das Feld (16) des Kreuzrostes (11) eingeschoben ist, dessen Bleche (11, 13) eine Höhe (H) aufweisen, die zum Abstand (B) der Bleche (12, 13) ein Verhältnis von B : H = 1 : 0,5 bis 1 : 5, vorzugsweise 1 : 1,5 aufweisen.

2. Staubgasfilter nach Anspruch 1, dadurch gekennzeichnet, daß die die Bügelstege (8b, 9b) verbindenden Verbindungsstege (8c, 9c) der Klemmvorrichtung (10) eine nach innen oder außen gerichtete Wölbung (8d, 9d) aufweisen.

3. Staubgasfilter nach Anspruch 1, dadurch gekennzeichnet, daß die Bleche (12, 13) des Kreuzrostes (11) versetzt angeordnete Schlitze (14, 15) aufweisen, mit denen die Bleche rostbildend ineinandergesteckt sind.

4. Staubgasfilter nach Anspruch 1, dadurch gekennzeichnet, daß der Kreuzrost (11) aus Profilblechen (12a, 13a) bzw. (12b, 13b) gebildet ist, die untereinander verbunden sind.

5. Staubgasfilter nach den Ansprüchen 1 bis 4, dadurch gekennzeichnet, daß der Kreuzrost (11) auf mit dem Filtergehäuse (17) verbundenen Konsolen (18) lose aufliegt.

## Claims

1. A dust gas filter with suspended filter hoses where the lower closed end of the filter hoses is fitted with a clamping device (10) supported by a cross grid consisting of rectangular upright plates in a spaced arrangement to form bounded fields that is characterised by the fact that the lower end of the filter hose (1) is sealed by a connecting piece (3) consisting of a closed base (4) with a collar (5) incorporating a countersunk bead (6); by the fact that the clamping device (10) is formed by two or more U-shaped bows (8,9) where the free ends (8a,9a) of the bow bars (8b,9b) of the bows (8,9) are connected with a fastening ring (7); by the fact that the fastening ring (7) is embedded in the bead (6) of the connecting piece (3), while the clamping device (10) with the bows (8,9) is pushed into the field (16) of the cross grid (11) that has plates (11,13) where their height (H) in relation to the spacing (B) of the plates (12,13) is in a ratio of B : H = 1 : 0,5 to 1 : 5, preferably 1 : 1, 5.

2. A dust gas filter in conformity with Claim 1, caracterised by the fact that the connecting links (8c,9c), which connect the bow bars (8b,9b) of the clamping device (10), have an inward or outward curvature (8d,9d).

3. A dust gas filter, in conformity with Claim 1, characterised by the fact that the plates (12,13) of the cross grid (11) have slots (14,15) in a staggered arrangement so that the plates are  interconnected to form a grid.

4. A dust gas filter, in conformity with Claim 1, characterised by the fact that the cross grid (11) consists of interconnected profile plates (12a,13a) and (12b,13b).

5. A dust gas filter, in conformity with the Claims 1 to 4, characterised by the fact that the cross grid (11) is resting loosely on the brackets (18) that are connected to the filter housing (17).


**Revendications**

1. Filtre à gaz chargés de poussières, équipés de manches pendant vers  le bas, l'extrémité inférieure fermée des manches étant munie d'un dispositif de serrage (10) qui prend appui sur une grille en croix composée de tôles disposées à une certaine distance les unes par  rapport aux autres, à angle droit et en saillie, formant ainsi des  compartiments délimités, caractérisé par le fait que l'extrémité inférieure de la manche (1) est fermée au moyen d'un piètement (3) à fond fermé (4), muni d'une collerette (5) comportant une moulure (6), qu'un dispositif de serrage (10) composé d'un ou de plusieurs ètriers (8, 9) est prévu, les extrémités libres (8a, 9a) des barretes (8b, 9b) des étriers (8, 9) étant reliées à un bague de fixation (7), que la bague de fixation (7) est encastrée dans la moulure (6) du piètement (3) et que le dispositif de serrage (10) avec les étriers (8, 9) est intégré dans le compartiment (16) de la grille en croix (11) dont les tôles (11, 13) présentent une hauteur (H), avec, eu égard à la distance (B) des tôles (12, 13), un rapport de B à H = 1 à 0,5 jusqu' à 1 à 5, de préférence 1 à 1, 5.

2. Filtre à gaz chargés de poussières suivant revendication 1, caractérisé par le fait que les barrettes de liaison (8c, 9c) du dispositif de serrage (10) reliant les barrettes d'étrier (8b, 9b) présentent une courbure (8d, 9d) vers l'intérieur ou vers l'extérieur.

3. Filtre à gaz chargés de poussières suivant revendication 1, cactérisé par le fait que les tôles (12, 13) de la grille en croix (11) présentent des fentes (14, 15) disposées en quinconce permettant d'encastrer les tôles de façon à former une grille.

4. Filtre à gaz chargés de poussières suivant revendication 1, caractérisé par le fait que la grille en croix (11) est constituée de tôles profilées (12a, 13a) ou (12b, 13b) reliées entre elles.

5. Filtre à gaz chargés de poussières suivant les revendications 1 à 4, caractérisé par le fait que la grille en croix (11) est posée librement sur des consoles (18) reliées au corps du filtre (17).

Fig. 1

Fig. 2

Schnitt A - B

12

11

13

16

15

14

Fig. 3

11

H

B

18

17

Fig. 4

Fig. 5

Fig. 6

Fig. 7